(19)

Europäisches Patentamt

European Patent Office

Office européen des brevets

(11) **EP 2 082 647 B1**

(12) **EUROPÄISCHE PATENTSCHRIFT**

(45) Veröffentlichungstag und Bekanntmachung des Hinweises auf die Patenterteilung:
**21.06.2017 Patentblatt 2017/25**

(51) Int Cl.:
**A22C 13/00** (2006.01)

(21) Anmeldenummer: **09000588.5**

(22) Anmeldetag: **16.01.2009**

(54) **Rohwurstprodukt mit Umhüllung aus einem textilen Flächengebilde und Verfahren zu seiner Herstellung**

Raw sausage product with casing made from a textile sheet and method for its fabrication

Produit de saucisse doté d'une enveloppe en structure plate textile et procédé pur sa fabrication

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **24.01.2008 DE 102008006876**

(43) Veröffentlichungstag der Anmeldung:
**29.07.2009 Patentblatt 2009/31**

(73) Patentinhaber: **Kalle GmbH**
**65203 Wiesbaden (DE)**

(72) Erfinder:
 • **Delius, Ulrich, Dr.**
  **60529 Frankfurt (DE)**

 • **Wolf, Peter**
  **49179 Ostercappeln (DE)**

(74) Vertreter: **Plate, Jürgen et al**
 **Plate Schweitzer Zounek**
 **Patentanwälte**
 **Rheingaustrasse 196**
 **65203 Wiesbaden (DE)**

(56) Entgegenhaltungen:
 EP-A2- 0 149 071   US-A- 4 396 039
 US-A- 4 401 135   US-A- 4 546 023
 US-A- 4 623 566   US-A1- 2005 244 601

**Beschreibung**

Die Erfindung bezieht sich auf eine Rohwurst mit einer Umhüllung auf Basis eines textilen Flächengebildes, wobei die Umhüllung eine thermisch gebildete Fügenaht in Längsrichtung aufweist.

Rohwürste sind dem Verbraucher unter Bezeichnungen wie Salami, Mettwurst und Cervelatwurst bekannt. Im allgemeinen handelt es sich dabei um Produkte, bei denen das Fleisch nach dem Abfüllen eine Fermentation unter starkem Feuchteverlust zu durchlaufen hat. Eingesetzt werden grob gewolftes Schweinefleisch, Rindfleisch, Speck sowie Pökelsalz und Gewürze. Nach dem Abfüllen des Gemisches in geeignete, wasserdampfpermeable Hüllen werden die Würste durch Erwärmen zunächst einer sogenannten Umrötung unterworfen. Die Temperaturen können sehr unterschiedlich sein ("Schwitzen" bei 18-25°C, "Pasteurisieren" bei 60-70°C). Anschließend erfolgt allgemein eine Kalträucherung, gefolgt von einer mehrwöchigen Reifung in speziellen Klimakammern (max. 23°C). Dabei verlieren die Würste zwischen 25 und 45% ihres ursprünglichen Wasseranteils. Unterder Hülle bildet sich infolge der Raucheinwirkung und der Abtrocknung eine dunkel gefärbte, schnittfeste Oberfläche aus. Für die Akzeptanz seitens des Verbrauchers ist eine gleichmäßige Farbe und Konsistenz der Oberfläche sehr wichtig.

Für einen ungehinderten Fortschritt der Reifung und, daraus resultierend, eine gleichmäßige Oberflächenausbildung muß die verwendete Wursthülle eine hohe und gleichförmige Permeabilität für Wasserdampf und Raucharomen aufweisen. Traditionell werden meist Hüllen aus Kollagen oder aus faserverstärkter, regenerierter Cellulose verwendet. Diese Hüllen werden von der Industrie direkt in Schlauchform hergestellt, besitzen also keine Nähte oder sonstige Fügezonen und zeigen über den gesamten Umfang konstante Eigenschaften.

Vereinzelt sind auch Hüllen mit in Längsrichtung verlaufender Fügenaht im Einsatz. Zur Realisierung von Würsten mit spezieller, nicht-zylindrischer Form werden sogar Hüllen hergestellt, bei denen zwei Gewebelagen umlaufend miteinander vernäht werden. Auf diese Weise sind Würste mit geschwungenen Konturen, z.B. Birnenformen, zugänglich. Vorteil dieser Hüllen ist die Verwendung von herkömmlichen, leicht verfügbaren Flachmaterialien. Für die Rohwurst-Anwendung werden dabei speziell faserige Flächenmaterialien, insbesondere Gewebe, Gewirke und Vliesstoffe, meist in beschichteter Form, eingesetzt. Solche Hüllen sind beispielsweise in den DE-A 21 28 613, 23 30 774, 30 29 028, 31 47 519, 41 41 924, 42 37 138 oder 44 17 244 offenbart.

In der US 4 396 039 und der US 4 401 135 sind Cellulose-Faserdärme mit geklebter Längsnaht offenbart, wobei die Längsnaht einen Klebestreifen umfaßt. Der Klebstoff auf dem Streifen wird vorzugsweise diskontinuierlich aufgetragen um die Rauchdurchlässigkeit zu verbessern.

Trotz all dieser Bemühungen der Industrie haben Rohwursthüllen auf Textilbasis im Markt bisher nur eingeschränkte Bedeutung erlangt.

Aus wirtschaftlichen Gründen besteht jedoch weiterhin ein grundlegendes Interesse an Hüllen auf Basis von Flachmaterialien. Nahtlos hergestellte Hüllen, beispielsweise solche aus Kollagen oder Celluloseregenerat, sind relativ teuer in der Herstellung. Ihre Produktion erfolgt mit Hilfe von speziellen Ringspaltdüsen, aus denen eine zuvor hergestellte Dispersion bzw. Lösung des Hüllenwerkstoffs, z.B. eine Kollagen-Dispersion oder Viskose, extrudiert und dabei zu schlauchförmigen Hüllen geformt wird. Die Filme müssen anschließend durch diverse chemische Bäder geführt werden, wodurch es zur Verfestigung des Werkstoffs durch Koagulation bzw. chemische Regeneration kommt. Diese Verfahren erlauben kaum noch eine Rationalisierung der Produktion durch Vergrößerung der Anlagen. Große Produktionsmengen lassen sich nur durch Parallelbetrieb mehrerer Düsen und mehrerer Schlauchführungs-Einrichtungen realisieren. Bahnen aus Flachmaterial lassen sich hingegen sehr effizient herstellen, indem ein Grundmaterial in großer Bahnbreite produziert und nach Bedarf in eine Vielzahl schmalerer Bahnen (sog. Nutzen) zerschnitten wird. Weiterer Vorteil ist, daß man ausgehend von einem Standard-Bahnmaterial kurzfristig verschiedene Nutzbreiten und damit verschiedene Kaliber realisieren kann. Das ist insbesondere für die Herstellung von Wursthüllen sehr wünschenswert, da deren Kaliber kaum standardisiert sind.

Ein weiterer wirtschaftlicher Aspekt, derfürdie Verwendung von Flachmaterialien bei der Herstellung der Hüllen spricht, betrifft den Abfüllvorgang beim Wursthersteller. Schlauchförmige Hüllen können prinzipiell nicht kontinuierlich gefüllt werden. Das effizienteste Füllverfahren für Schlauchhüllen ist die Arbeit mit Füll-Clip-Automaten. Dabei müssen die Hüllen vor dem Einsatz zu sogenannten Raupen konfektioniert werden. Die Länge einer Raupe ist durch die Länge des vorgesehenen Füllrohres begrenzt. Füllrohre haben allgemein eine Länge von 40 bis 100 cm. Eine Raupe faßt - abhängig von ihrer Länge und der Wanddicke der Hülle - etwa 15 bis 50 m Schlauchmaterial. Am Füll-Clip-Automat wird zu Arbeitsbeginn manuell eine Raupe auf das Füllrohr geschoben. Füllen, Verschließen und Abtrennen der Würste erfolgt dann automatisch. Ist eine Raupe aufgebraucht, muß der Prozeß unterbrochen werden, um eine neue Raupe zu positionieren.

Mit wesentlich weniger Unterbrechungen kommen hingegen kombinierte Schlauchsiegel- und Füllprozesse aus. Anstelle von Raupen gelangt hier flaches Folienmaterial zum Einsatz, welches dem Prozeß über Wickel mit theoretisch unbegrenzter Länge zugeführt wird. In der Praxis befinden sich typischerweise 500 bis 1000 m auf einem Wickel. Der Prozeß kann kontinuierlich ablaufen, bis ein Wickel aufgebraucht ist. Der Prozeß beinhaltet folgende Schritte:

- kontinuierliches Zuführen der Folienbahn in Richtung eines Füllrohres;

- axiales Rundbiegen der Bahn, vorzugsweise mit Hilfe einer Formschulter, so daß das Bahnende das Rohr konzentrisch umschließt und die Längskanten der Bahn sich berühren oder etwas überlappen;

- kontinuierliches Siegeln der Bahnkanten miteinander durch ein Heizelement, welches das Material im Fügebereich erwärmt und auf das Rohr preßt. Sofern die Bahnkanten überlappend geführt sind, bildet sich eine Überlappungs-Siegelnaht. Alternativ können die Kanten auf Stoß gelegt und durch ein separat von außen zugeführtes, den Stoß überbrückendes Siegelband fest miteinander verbunden werden;

- Transportieren des so gebildeten Schlauchs über das Rohrende hinweg, wo er durch die austretende Fleischmasse prall ausgefüllt wird;

- Abteilen von Portionen aus dem gefüllten Schlauch mittels einer Einschnürvorrichtung, Fixierung und Abdichtung der Einschnürungen mit zwei nebeneinander positionierten Metall- und/oder Kunststoffclips, abschließend Durchtrennen des Schlauchs zwischen den beiden Clips unter Bildung einzelner Würste.

Die Vorrichtungen für diesen Prozeßtyp sind unter verschiedenen herstellerspezifischen Bezeichnungen bekannt, z.B. "TSCA" für Geräte der Fa. Polyclip. Ihr Aufbau ist in diversen Druckschriften, z.B. in der DE 14 11 489 und der EP 0 105 558 detailliert beschrieben.

Insgesamt ergibt die Schlauchsiegel- und Fülltechnologie also zwei wirtschaftliche Vorteile gegenüber der Verwendung nahtloser Hüllen:

1. rationellere Herstellung des Hüllenmaterials durch Verwendung eines vorgefertigten breiten Bahnmaterials und Schneiden von Nutzen nach Bedarf;
2. effizienterer Füllprozeß, da Prozeßunterbrechungen lediglich bei Aufbrauchen eines kompletten Folienwickels erforderlich sind.

Damit die Siegelverbindung zustande kommen kann, müssen eine oder besser beide derzusammengeführten Oberflächen geeignete, thermisch klebende Beschichtungen aufweisen. Im Fall der Überlappungs-Siegelung werden Vorder- und Rückseite des Bahnmaterials zusammengeführt. Hier hat man es allgemein mit stofflich verschiedenen Oberflächen zu tun; im Fall von Textilträgern liegt hinten meist die nackte Gewebe- bzw. Vliesstruktur vor, während vorn eine Polymer-Oberflächenbeschichtung mit thermoplastischem Charakter vorhanden ist. Bei ausreichend dicker und plastischer Oberflächenschicht erfolgt während des Erwärmens und Pressens ein Anschmelzen der Beschichtung und partielles Eindringen des Polymers in die Poren des gegenseitigen Trägers. Nach dem Erkalten ist die Oberflächenschicht dann mechanisch mit der Gegenseite verankert. Im Fall der Stoßverbindung mit Siegelband trifft üblicherweise das Siegelband mit seiner thermoplastischen Oberfläche auf die ebenfalls thermoplastische Oberfläche des Trägermaterials. Bei Erwärmung sollten die Polymere beider Oberflächen anschmelzen und miteinander verkleben. Idealerweise kommt es zur Interdiffusion beider Schichten; dies tritt insbesondere dann ein, wenn die Polymere identisch oder chemisch verwandt sind.

Den wirtschaftlichen Vorteilen des Schlauchsiegel- und Füllprozesses steht bei der Rohwurst-Herstellung jedoch ein technischer Mangel entgegen. Die längs verlaufende Fügenaht (nachfolgend auch als Siegelnaht bezeichnet) besitzt prinzipbedingt eine wesentlich geringere Permeabilität als das angrenzende Material. Denn die Durchlässigkeit eines Mediums für Wasserdampf wie auch für (Rauch-)Gase unterliegt festen Gesetzmäßigkeiten. Ein gegebenes Schichtmaterial besitzt einen stoffspezifischen Permeationskoeffizienten P gemäß nachfolgender Gleichung (Quelle: S. Pauly in: Polymer Handbook, J. Brandrup, E. H. Immergut und E. A. Grulke (Herausgeber), 4. Auflage (1999), Band VI, S. 543, John Wiley & Sons Inc.):

$$P = \text{(Menge Permeant)} \times \text{(Foliendicke)} / ((\text{Fläche}) \times (\text{Zeit}) \times (\text{Druckgefälle quer zur Folie}))$$

Durch Umformen ergibt sich:

$$\text{Permeation} = \text{(Menge Permeant)} / (\text{Zeit}) = (P \times (\text{Fläche}) \times (\text{Druckgefälle})) / (\text{Foliendicke})$$

Die Permeation ist also umgekehrt proportional zur Dicke des Schichtmaterials.

Nun läßt sich bei Siegelnähten, egal ob als Überlappnaht oder Stoßnaht mit Siegelband ausgeführt, eine wesentliche Erhöhung der Material-Gesamtstärke prinzipiell nicht vermeiden. Bei einer Überlappnaht ist die Materialstärke verdoppelt (und die Permeation halbiert). Bei einer Stoßnaht mit Siegelband gilt das Gleiche, wenn Dicke und Zusammensetzung des Bandes identisch sind mit dem vorhandenen Bahnmaterial. Durch ein Band geringerer Dicke ließe sich der Effekt theoretisch vermindern. In der Praxis ist dies jedoch kaum möglich, da das Band (insbesondere in Querrichtung) die gleiche mechanische Spannung aushalten muß wie der restliche Schlauch.

Konsequenz daraus ist, daß die Durchlässigkeit für Wasserdampf wie auch für Rauchbestandteile unter derartigen Siegelnähten nur etwa halb so groß ist wie beim angrenzenden Hüllenmaterial. Im Falle einer Rohwurst-Füllung würde die Wurstoberfläche unterhalb der Siegelnaht stark verzögert abtrocknen, und es käme zu Ausbildung eines inakzeptablen hellen Längsstreifens auf der Wurst.

Es stellte sich also die Aufgabe, ein Rohwurstprodukt bereitzustellen, dessen Produktion unter Nutzung der wirtschaftlichen Vorteile des Schlauchsiegel- und Füllprozesses erfolgt, aber keine Streifen auf der Wurstoberfläche unter der Siegelnaht ausbildet.

Gelöst wurde die Aufgabe mit einem textilen Flächenmaterial, das vorzugsweise wenigstens auf einer Seite eine Beschichtung aus einem Polymermaterial aufweist und das mit einem Siegelband zum Schlauch gefügt ist, wobei sich auf dem Siegelband eine diskontinuierliche Schicht aus einem Siegelpolymer befindet und die mechanische Verbindung zwischen Band und Flächenmaterial punktuell, d.h. nicht vollflächig, ist.

Gegenstand der Erfindung ist demgemäß ein Rohwurstprodukt in einer schlauchförmigen Hülle auf Basis eines Textilmaterials gemäß Anspruch 1, wobei das Textilmaterial beschichtet ist mit einem bedingt oder gänzlich thermoplastischen Polymer und wobei die Hülle eine Längsnaht mit einem Siegelband aufweist, das dadurch gekennzeichnet ist, daß sich auf dem Siegelband eine diskontinuierliche Schicht aus einem Siegelpolymer befindet, wobei das Siegelpolymer des Siegelbands identisch ist mit dem thermoplastischen Polymer mit dem das Textilmaterial beschichtet ist oder ein Teil der Monomereinheiten in dem Siegelpolymer identisch ist mit Monomereinheiten in dem thermoplastischen Polymer.

Dadurch wird erreicht, daß die Wasserdampf-Permeation der Hülle, gemessen bei 23°C und 85% r.F. innerhalb der die Siegelnaht bildenden Fläche vorzugsweise mindestens 70% des Wertes beträgt, den das angrenzende Hüllenmaterial besitzt.

Die Verbindung zwischen dem Siegelband und der Hülle ist im wesentlichen punktuell. Dabei soll die Gesamtfläche der einzelnen Beschichtungspunkte so groß sein, daß die Siegelnaht eine ausreichende mechanische Festigkeit - insbesondere in Querrichtung - bietet, damit die Hülle beim Füllen nicht platzt, andererseits jedoch möglichst klein, um die Permeation im Bereich der Siegelnaht nicht unnötig zu verschlechtern. Abhängig auch von der Art des Siegelpolymers genügt es allgemein, wenn 10 bis 60 %, bevorzugt 20 bis 50 %, der Fläche des Siegelbands mit Siegelpolymer bedeckt sind. Die Punkte aus dem Siegelpolymer haben (nach dem Kalandrieren) vorzugsweise einen mittleren Durchmesser von 0,005 bis 5 mm, bevorzugt von 0,01 bis 1 mm besonders bevorzugt von 0,05 bis 0,5 mm. Sie sollten möglichst klein sein, damit eine gleichmäßige Permeation im Bereich des Siegelbands gegeben ist. Beim Siegeln verändert sich der Durchmesser nur unwesentlich.

Dem textilen Flächenmaterial kommt die Funktion eines Trägers für die Beschichtung zu. Er liefert den wesentlichen Beitrag zur mechanischen Festigkeit der späteren Hülle.

Als Flächenmaterial kommen prinzipiell alle Arten von Textilien - also Gewebe, Gewirke und Vliesstoffe - in Frage, soweit sie eine offene bzw. offenporige Struktur besitzen (also gut gasdurchlässig sind) und die wesentlichen für eine Rohwursthülle erforderlichen mechanischen Eigenschaften mitbringen. Vorzugsweise sollte das Material eine Naß-Festigkeit in Querrichtung von mindestens 30 N / 50 mm aufweisen. Geeignet sind z.B. engmaschige Gewebe aus Baumwoll- oder Viskosefasern bzw. Mischfasern aus Baumwolle und Polyester oder Viskose und Polyester, Vliese aus Stapelfasern auf Basis von Viskose, Polyester oder Polypropylen bzw. aus Gemischen von zwei oder drei dieser Fasertypen, weiterhin Spinnvliese (Wirrvliese aus Endlosfasern) aus Polyester-, Polyamid- und/oder Polypropylenfasern. Die Vliese können mechanisch, chemisch oder thermisch nachverfestigt sein.

Bevorzugt sind Gewebe mit feiner Leinenbindung aus Viskosefasern oder Viskose-Polyester-Mischfasern in Flächengewichten zwischen 30 und 150 g/m$^2$ (vor einem eventuellen Beschichten). Ebenfalls bevorzugt sind im Naßlegeverfahren hergestellte Stapelfaser-Vliese mit chemischer oder thermischer Verfestigung in Flächengewichten zwischen 25 und 100 g/m$^2$. Weiterhin bevorzugt sind Spinnvliese aus Polyester und/oder Polyamidfasern, nachverfestigt partiell durch Heißprägung oder flächig durch Heißkalandrierung in Flächengewichten zwischen 25 und 80 g/m$^2$. Als Beschichtungswerkstoff sind verschiedene filmbildende Polymere geeignet, die polare bzw. hydrophile Gruppen besitzen, in Wasser quellbar, aber nicht löslich sind und infolgedessen eine hohe Permeabilität für Wasserdampf und andere polare Stoffe aufweisen. Die materialspezifische (intrinsische) Wasseraufnahme der Polymere, gemessen nach ASTM E570 (Prüfkörper 24h in Wasser gelagert), sollte mindestens 1,5 Gew.-% betragen.

Im Interesse der späteren Siegelbarkeit sollten die Polymere bedingt oder gänzlich thermoplastisch sein, also eine Erweichungstemperatur deutlich unterhalb ihrer Zersetzungstemperatur aufweisen. Die Erweichungstemperatur sollte sich vorzugsweise im Bereich zwischen 80 und 200 °C bewegen. Sie sollte zudem vorzugsweise unterhalb der Siegeltemperatur liegen, um eine besonders feste Siegelverbindung zu erhalten, in der die auf dem Siegelband befindlichen Polymere mit denen aus der Beschichtung verschmolzen sind.

Nachfolgend werden bevorzugte Polymere - getrennt nach ihrer Applikationsweise - genannt:

Für Beschichtungen aus wäßriger Dispersion sind Emulsionspolymerisate aus Acryl- oder Methacrylsäureestern, die ggf. geeignete Comonomere wie (unveresterte) Acryl- oder Methacrylsäure, Acrylnitril, Vinylacetat und/oder Styrol enthalten, gut geeignet. Die Polymerisate sollten idealerweise thermisch oder bei Trocknung vernetzend sein, also vernetzbare Monomerbausteine und Vernetzersubstanzen haben. Besonders bevorzugt sind Copolymerisate aus Methylacrylat, Butylacrylat und Acrylsäure mit einem Feststoffgehalt von 25 bis 40 Gew.-%.

Für Beschichtungen per Schmelzeextrusion sind thermoplastische Segment- bzw. Copolymere vom Typ Polyether-ester, Polyether-block-amid, Polyester-block-amid, Polyether-urethan und Polyester-urethan verwendbar, ebenso Co- bzw. Terpolymere von Acrylsäure oder Methacrylsäure mit Ethylen bzw. Ethylen und einem oder mehreren weiteren Vinylmonomeren, wobei der Anteil (Meth-)Acrylsäure mindestens 15 Gew.-% betragen sollte. Ferner eignen sich Ethylen-Vinylalkohol-Copolymere mit einem Ethylengehalt von höchstens 42 Gew.-%. Besonders bevorzugt sind Polyether-ester und Polyetheramide, die hydrophile Segmente vom Typ Polyethylenglykol oder Polypropylenglykol enthalten und die einen Schmelzflußindex (MFI) von mindestens 10 g/10 min (gemessen bei 240 °C unter einer Last von 2,16 kg) aufweisen.

Das Siegelband wird ebenfalls aus einem textilen Flächenmaterial hergestellt, indem dieses längs in schmale Streifen geschnitten wird (Breite vorzugsweise 10 bis 30 mm). Es kommen prinzipiell die gleichen textilen Trägermaterialien in Frage wie oben beschrieben. Bevorzugt sind feine Gewebe aus Viskose- und/oder Polyesterfasern sowie Spinnvliese aus Polyester- und/oder Polyamidfasern, letztere mit leichter chemischer Nachverfestigung.

Das diskontinuierliche Aufbringen des Siegelpolymers auf das Trägermaterial erfolgt vorzugsweise vordem Zuschneiden des Bandes und durch Pulverbeschichtung. Das Prinzip der Pulverbeschichtung ist Stand der Technik bei der Textilveredelung und dem Fachmann geläufig. Ein übliches Verfahren beinhaltet:

1. Erwärmen der Textilbahn auf eine Temperatur leicht oberhalb der Erweichungstemperatur des aufzubringenden Siegelpolymers,

2. gleichmäßiges Aufstreuen des zu Pulver gemahlenen Siegelpolymers (entsprechende Vorrichtungen sind bekannt, z.B. kann das Aufstreuen durch ein elektrostatisches Feld unterstützt werden),

3. Anpressen und Fixieren der Polymerpartikel durch Kalandrieren der Textilbahn. Vorzugsweise sind die Kalandrierwalzen dabei ebenfalls beheizt.

Wichtig ist, daß die Polymerpartikel anschließend keinen geschlossenen Film ergeben, sondern vereinzelte "Punkte" auf der Textiloberfläche bilden, deren Flächenbelegung 10 bis 60, bevorzugt 20 bis 50%, ausmacht. Dies ist durch geeignetes Einstellen der Streumenge und des Anpreßdrucks des Kalanders zu erreichen.

Durch die isoliert auf dem Siegelband aufliegenden Polymerpartikel kommt es beim späteren Schlauchsiegel- und Füllprozeß zu punktförmigen mechanischen Verbindungen zwischen Band und Bahnmaterial, welche bei hinreichend engem Abstand der Punkte eine ausreichende Gesamtfestigkeit der Siegelfläche ergeben. In dem Raum zwischen zwei Siegelpunkten ist die Wasserdampf-Permeabilität nahezu identisch zu der des ungesiegelten Bahnmaterials. Ein zusätzlicher Permeationswiderstand ist in den Zwischenräumen ja nur durch den aufliegenden Textilträger des Bandes gegeben und wegen dessen Porosität äußerst gering.

Das Siegelpolymer für das Band muß im Interesse guter Adhäsionswerte auf das Beschichtungspolymer des Bahnmaterials abgestimmt sein. Geeignet sind insbes. Kombinationen aus stofflich verwandten Polymeren, z. B.:

| Polymer für Bahnmaterial | Polymer für Siegelband |
| --- | --- |
| Acryl- oder Methacrylsäureesterhaltige Polymere (für Dispersionsbeschichtung) | Ethylen/Methylacrylat-Copolymere Ethylen/(Meth-)acrylsäure-Copolymere |
| Polyether-ester (für Schmelzebeschichtung) | amorphe Copolyester ("APET") |
| Polyester-block-amide und Polyether-block-amide (für Schmelzebeschichtung) | aliphatische Copolyamide mit Schmelztemperaturen < 180°C |
| Polyester-urethane und Polyetherurethane (für Schmelzebeschichtung) | Polyurethan-Schmelzkleber |

Bevorzugt sind folgende Kombinationen:

| Polymer für Bahnmaterial | Polymer für Siegelband |
|---|---|
| Acryl- oder Methacrylsäureesterhaltige Polymere (für Dispersionsbeschichtung) | Ethylen/Methylacrylat Copolymere |
| Polyether-ester (für Schmelzebeschichtung) | amorphe Copolyester ("APET") |
| Polyether-block-amide (für Schmelzebeschichtung) | PA6/12 mit Schmelztemperatur im Bereich 130 bis 170°C |

Gegenstand der vorliegenden Erfindung ist demgemäß auch ein Verfahren gemäß Anspruch 12 zur Herstellung des Rohwurstprodukts. Es umfaßt die Schritte:

- Bereitstellen eines bahnförmigen, gegebenenfalls beschichteten Textilmaterials;
- Bereitstellen eines Siegelbands mit einer diskontinuierlichen Siegelschicht aus einem Siegelpolymer das identisch ist mit dem thermoplastischen Polymer mit dem das Textilmaterial beschichtet ist oder in dem ein Teil der Monomereinheiten identisch ist mit Monomereinheiten in dem thermoplastischen Polymer;
- Formen des bahnförmigen beschichteten Textilmaterials zu einem Schlauch auf einem Füllrohr einer Wurstfüllmaschine, wobei sich die Längskanten des Textilmaterials nach dem Schlauchformen berühren oder überlappen;
- Führen des Siegelbands über den Bereich, in dem sich die Längskanten des Textilmaterials berühren oder sich überlappen;
- Siegeln des Bandes gegen das gegebenenfalls beschichtete Textilmaterial unter Einwirkung von Hitze und Druck, so daß eine mechanisch stabile Rohwursthülle entsteht;
- Füllen der Hülle mit Rohwurstbrät unmittelbar nach dem Siegeln, so daß ein Rohwurstprodukt entsteht;
- gegebenenfalls Kalträuchern des Rohwurstprodukts und
- Reifen des Rohwurstprodukts.

**Beispiele**

Für die Beispiele wurden die folgenden Materialien, Polymere, Geräte und Methoden verwendet:

*Textilmaterial:*

Ein handelsübliches Viskose-Polyester-Mischgewebe (30% Polyesteranteil) in Leinenbindung mit einem Flächengewicht von 60 g/m$^2$ und einer Naß-Querfestigkeit von 105 N / 50mm.

*Polymer 1:*

Polyether-block-amid mit Ketteneinheiten auf Basis von Polyethylenglykol und auf Basis Polycaprolactam und einer Schmelztemperatur von 169 °C (®Pebax MV 1074 SA der Arkema S.A.).

*Polymer 2:*

Aliphatisches Copolyamid auf Basis Caprolactam und Laurinlactam im Verhältnis 50:50 (PA 6/12) und mit einer Schmelztemperatur von 130 °C (®Grilon CF6S der Ems-Chemie AG); dieses vermahlen zu Pulver mit einer mittleren Körngröße $d_{50}$ von ca. 300 $\mu$m.

*Schmelzebeschichtungsanlage:*

Labor-Beschichtungsanlage der Fa. Collin mit beheizter Gießwalze von 500 mm Breite, Kontaktwalze sowie Preßwalzen-Paar; Schmelzezufuhr per 25 mm-Einschneckenextruder mit 400 mm-Breitschlitzdüse.

*Pulverbeschichtungsanlage:*

Handelsüblicher Textilkalander für 100 mm Bahnbreite mit beheizbaren Walzen und Zusatzeinheit zur Pulverbeschichtung (elektrisch betriebenes Rüttelsieb).

*Heißpresse:*

Laborgerät der Fa. Schwabenthan, elektrisch beheizt, mit Preßflächen 150 x 150 mm und hydraulisch einstellbarem Preßdruck.

*Schlauchsiegel-und Füllvorrichtung:*

Modell "TSCA" der Polyclip GmbH, gekoppelt mit handelsüblichem Dosierautomat für Wurstmasse der Fa. Handtmann.

*Bestimmung der Wasserdampf-Permeation:*

Die Wasserdampf-Permeation wurde nach DIN 53122, Teil 3 bei 23°C und einem Feuchtegefälle von 85% gegen 0% r. F. gemessen.

Eine Siegelnaht bietet wegen ihrer geringen Breite nicht die Möglichkeit , den üblichen Normen für die Wasserdampf-Permeation entsprechende Probestücke zu schneiden. Normgerechte Ergebnisse können dennoch erhalten werden, indem man Proben mit kleinerem Durchmesser verwendet, diese wie vorgegeben vermißt und die Meßwerte anschließend um den Faktor multipliziert, den die normgemäße Fläche größer ist als die tatsächliche Probenfläche. Um die Proben in die Meßzellen einzuspannen, kann z.B. eine "Maske" aus Aluminiumblech verwendetwerden, deren Außendurchmesser zur Meßzelle paßt. In die Maske wird mittig ein Loch definierter Fläche geschnitten, das etwas kleiner ist als der Probenzuschnitt. Die Probe wird auf das Loch aufgelegt und am Rand per Klebstoff luftdicht der Maske verbunden.

**Beispiel 1**

Herstellung von beschichtetem Bahnmaterial

Das Textilmaterial wurde zu Nutzen von 400 mm Breite geschnitten. Diese wurden per Schmelzebeschichtungsanlage einseitig mit einem Film von Polymer 1 überzogen. Dazu wurde das Polymergranulat im Extruder bei Temperaturen von 120 bis 240°C ansteigend geschmolzen und plastifiziert, durch die auf 240°C beheizte Düse gepreßt und auf die auf 80°C beheizte Gießwalze aufgelegt. Direkt hinter dem Schmelzefilm wurde die Textilbahn auf die Walze aufgelegt und per Kontaktwalze angepreßt. Der gebildete Verbund wurde anschließend per nachgeschaltetem Walzenpaar mit einem Druck von 50bar verpreßt, dann gekühlt, an den Kanten besäumt und aufgewickelt. Die Auftragsmenge an Polymer betrug 40 g/m$^2$. Das Material wurde anschließend in Teilnutzen von 157 mm Breite aufgeschnitten. An 5 Probestücken wurde die Wasserdampf-Permeation gemessen. Es ergab sich ein Mittelwert von 520 g / m$^2$ · d.

**Beispiel 2**

Herstellung von Siegelband

Textilmaterial wurde in Nutzen von 1000 mm Breite geschnitten. Ein Nutzen wurde durch den Textilkalandergeführt und über beheizter Preßwalzen auf eine Temperatur von 140 °C erwärmt. Auf die warme, horizontal laufende Bahn wurden per Rüttelsieb gleichmäßig Körner des Polymers 2 aufgetragen. Anschließend passierte die Bahn weitere Preßwalzenpaare, von denen das erste auf 120 °C, die übrigen auf Raumtemperatur temperiert waren. Das fertige Bahnmaterial wurde besäumt und zu Siegelbändern von 15 mm Breite aufgeschnitten. Ein Rest wurde ungeschnitten aufbewahrt. Eine exakte Messung der Wasserdampf-Permeation war nicht möglich, da die Permeabilität des Materials für das Meßverfahren zu hoch war.

**Beispiel 3**

Testsiegelung

Von dem Bahnmaterial aus Beispiel 1 und nicht zerteiltem Materialrest aus Beispiel 1 wurden Probestücke von 100 x 100 mm geschnitten. Je 1 Probestück des ersten und eines des zweiten Materials wurden mit den Beschichtungsseiten zueinander aufeinander gelegt und per Heizpresse bei einer Temperatur von 200 °C und mit einem Druck von 6 bar 5 s lang gesiegelt. Nach dem Abkühlen lag ein fester Verbund vor, der sich von Hand nur unter großem Kraftaufwand trennen ließ. Die an 5 Siegelproben gemessene Wasserdampf-Permeation betrug im Durchschnitt 460 g / m$^2$ · d.

**Beispiel 4**

Schlauchsiegel- und Füllversuch mit anschließender Wurstreifung

Ein aufgewickelter Teilnutzen aus Beispiel 1 sowie aufgewickeltes Siegelband aus Beispiel 2 wurde in den Schlauchsiegel- und Füllautomat "TSCA" eingelegt. Die Bahnführung wurde so eingestellt, daß die Längskanten auf Stoß gelegt und das Siegelband mittig über den Stoß geführt wurde. Der Dosierautomat wurde mit grobkörnigem, gekühlten Salamibrät beschickt. Das Siegelelement des TSCAwurde auf eine Temperatur von 230 °C und den maximal möglichen Anpreßdruck eingestellt. Unterdiesen Bedingungen wurde Schlauch mit einem Kaliber von 50 mm gesiegelt und dieser kontinuierlich mit Salamibrät gefüllt. Von der kontinuierlich entstehenden Abfüllung wurden automatisch Würste mit einem Gewicht von jeweils 400 g abgeteilt, die an den Enden verclipt und hinter den Clipsen voneinander getrennt wurden.

Die Würste wurden aufgehängt, in eine Räucher- und Reifekammer verbracht und unter üblichen Bedingungen dort umgerötet und kalt geräuchert. Hierauf erfolgte eine vierwöchige Reifung nach einem gängigen Klimaprogramm für Salami; zuletzt betrug die Temperatur 18°C und die relative Luftfeuchte 45%. Der mittlere Gewichtsverlust der Würste betrug nach der Reifung 36%. Die Würste wurden abgeschält und die Wurstoberfläche wurde nach Farbe und Konsistenz beurteilt. Bei allen Würsten zeigte sich eine gleichmäßig dunkelbraune Färbung und ein gleichmäßig fester Griff. Ein Streifen war weder sichtbar noch tastbar.

**Vergleichsbeispiel 1**

Herstellung von Siegelband

Ein Rest des vollflächig beschichteten Bahnmaterials aus Beispiel 1 wurde ebenfalls zu Siegelbändern von 15mm Breite aufgeschnitten.

**Vergleichsbeispiel 2**

Testsiegelung

Von dem Bahnmaterial aus Beispiel 1 wurden erneut Probestücke von 100x100mm geschnitten. Je 2 dieser Probestücke wurden mit den Beschichtungsseiten zueinander aufeinander gelegt und heiß verpreßt, wie in Beispiel 2 beschrieben. An 5 dieser Probestücke wurde wieder die Wasserdampf-Permeation gemessen; sie betrug im Mittel nur 250 g / m$^2$ · d.

**Vergleichsbeispiel 3**

Schlauchsiegel- und Füllversuch mit anschließender Wurstreifung

Unter den gleichen Bedingungen wie in Beispiel 4 wurden Salamiwürste hergestellt, wobei jedoch Siegelband aus Beispiel 2 zum Einsatz kam. Die Beurteilung der fertig gereiften und abgeschälten Würste zeigte helle, deutlich kontrastierende Längsstreifen an den Positionen, wo vorher das Siegelband aufgelegen hatte. Im Bereich der Streifen war außerdem eine deutlich weichere Konsistenz der Oberfläche tastbar als auf der übrigen Oberfläche.

**Patentansprüche**

1. Rohwurstprodukt in einer schlauchförmigen Hülle auf Basis eines beschichteten Textilmaterials, wobei das Textilmaterial beschichtet ist mit einem bedingt oder gänzlich thermoplastischen Polymer und wobei die Hülle eine Längsnaht mit einem Siegelband aufweist, **dadurch gekennzeichnet, daß** sich auf dem Siegelband eine diskontinuierliche Schicht aus einem Siegelpolymer befindet, wobei das Siegelpolymer des Siegelbands identisch ist mit dem thermoplastischen Polymer, mit dem das Textilmaterial beschichtet ist oder ein Teil der Monomereinheiten in dem Siegelpolymer identisch ist mit Monomereinheiten in dem thermoplastischen Polymer.

2. Rohwurstprodukt gemäß Anspruch 1, **dadurch gekennzeichnet, daß** die Wasserdampf-Permeation der Hülle, gemessen bei 23°C und 85% r.F. innerhalb der die Siegelnaht bildenden Fläche mindestens 70% des Wertes beträgt, den die Hülle außerhalb dieser Fläche besitzt.

3. Rohwurstprodukt gemäß Anspruch 1, **dadurch gekennzeichnet, daß** 10 bis 60 %, bevorzugt 20 bis 50 %, der Fläche des Siegelbands mit Siegelpolymer bedeckt sind.

4. Rohwurstprodukt gemäß einem oder mehreren der Ansprüche 1 bis 3, **dadurch gekennzeichnet, daß** die Punkte aus dem Siegelpolymer einen mittleren Durchmesser von 0,005 bis 5 mm, bevorzugt von 0,01 bis 1 mm, besonders bevorzugt von 0,05 bis 0,5 mm aufweisen.

5. Rohwurstprodukt gemäß einem oder mehreren der Ansprüche 1 bis 4, **dadurch gekennzeichnet, daß** das Textilmaterial ein Gewebe, Gewirke oder ein Vlies ist, das unbeschichtet vorzugsweise ein Gewicht von 30 bis 150 $g/m^2$ aufweist.

6. Rohwurstprodukt gemäß einem oder mehreren der Ansprüche 1 bis 5, **dadurch gekennzeichnet, daß** das Textilmaterial aus Baumwollfasern, Viskosefasern, Polyesterfasern, Polyamidfasern, Polypropylenfasern, Mischfasern aus Baumwolle und Polyester, Mischfasern aus Viskose und Polyester, Stapelfasern auf Basis von Viskose, Polyester oder Polypropylen oder Gemischen davon besteht.

7. Rohwurstprodukt gemäß einem oder mehreren der Ansprüche 1 bis 6, **dadurch gekennzeichnet, daß** das Textilmaterial vor einem Beschichten eine Naß-Festigkeit in Querrichtung von mindestens 30 N / 50mm aufweist.

8. Rohwurstprodukt gemäß einem oder mehreren der Ansprüche 1 bis 7, **dadurch gekennzeichnet, daß** das Textilmaterial mit mindestens einem thermoplastischen, filmbildenden Polymer beschichtet ist, das polare bzw. hydrophile Gruppen besitzt, in Wasser quellbar, jedoch nicht löslich ist und eine (intrinsische) Wasseraufnahme, gemessen nach ASTM E570 (Prüfkörper 24h in Wasser gelagert) von mindestens 1,5 Gew.-% zeigt, wobei das Textilmaterial vorzugsweise nur auf der der Rohwurst abgewandten Seite beschichtet ist.

9. Rohwurstprodukt gemäß einem oder mehreren der Ansprüche 1 bis 8, **dadurch gekennzeichnet, daß** das Polymer der Beschichtung auf dem Textilmaterial ein Emulsionspolymerisat aus (Meth)acrylestern, gegebenenfalls mit Comonomer-Einheiten aus Acryl- oder Methacrylsäure, Acrylnitril, Vinylacetat und/oder Styrol, ein thermoplastisches Segment- oder Copolymer vom Typ Polyether-ester, Polyether-block-amid, Polyester-block-amid, Polyether-urethan oder Polyester-urethan, ein Copolymer mit Einheiten aus (Meth)acrylsäure und Ethylen und gegebenenfalls einem oder mehreren weiteren Vinylmonomeren, wobei der Anteil (Meth-)Acrylsäure mindestens 15 Gew.-% beträgt, oder ein Ethylen-Vinylalkohol-Copolymer mit einem Ethylengehalt von höchstens 42 Gew.-% umfaßt.

10. Rohwurstprodukt gemäß einem oder mehreren der Ansprüche 1 bis 9, **dadurch gekennzeichnet, daß** das Siegelband ein Textilmaterial umfaßt, das vorzugsweise identisch ist mit dem der Hülle und das vorzugsweise beschichtet ist mit einem Ethylen/Alkyl(meth)acrylat-Copolymer, einem Ethylen/(Meth)acrylsäureCopolymer, einem Ethylen/Vinylacetat-Copolymer, einem amorphen Copolyester, einem aliphatischen Copolyamid mit einem Erweichungspunkt von weniger als 180 °C oder einem Polyurethan-Schmelzkleber.

11. Rohwurstprodukt gemäß einem oder mehreren der Ansprüche 1 bis 10, **dadurch gekennzeichnet, daß** das Siegelband eine Breite von 10 bis 30 mm hat.

12. Verfahren zur Herstellung des Rohwurstprodukts gemäß einem oder mehreren der Ansprüche 1 bis 11, **dadurch gekennzeichnet, daß** es die folgenden Schritte umfaßt:

- Bereitstellen eines bahnförmigen, beschichteten Textilmaterials das beschichtet ist mit einem bedingt oder gänzlich thermoplastischen Polymer;
- Bereitstellen eines Siegelbands mit einer diskontinuierlichen Siegelschicht aus einem Siegelpolymer das identisch ist mit dem thermoplastischen Polymer, mit dem das Textilmaterial beschichtet ist oder in dem ein Teil der Monomereinheiten identisch ist mit Monomereinheiten in dem thermoplastischen Polymer;
- Formen des bahnförmigen, gegebenenfalls beschichteten Textilmaterials zu einem Schlauch auf einem Füllrohr einer Wurstfüllmaschine, wobei sich die Längskanten des Textilmaterials nach dem Schlauchformen berühren oder überlappen;
- Führen des Siegelbands über den Bereich, in dem sich die Längskanten des Textilmaterials berühren oder sich überlappen;
- Siegeln des Bands gegen das beschichtete Textilmaterial unter Einwirkung von Hitze und Druck, so daß eine mechanisch stabile Rohwursthülle entsteht;
- Füllen der Hülle mit Rohwurstbrät unmittelbar nach dem Siegeln, so daß ein Rohwurstprodukt entsteht;

- gegebenenfalls Kalträuchern des Rohwurstprodukts und
- Reifen des Rohwurstprodukts.

13. Verfahren gemäß Anspruch 12, **dadurch gekennzeichnet, daß** das beschichtete Textilmaterial und das Siegelband jeweils in Form eines Wickels mit einer Länge von 500 bis 1000 m bereitgestellt wird.

14. Verfahren gemäß Anspruch 13, **dadurch gekennzeichnet, daß** das Siegelpolymer auf das Siegelband in Form von Pulver aufgebracht und anschließend kalandriert wurde.

**Claims**

1. Uncooked dried sausage product in a tubular casing based on a coated textile material, wherein the textile material is coated with a partially or completely thermoplastic polymer and wherein the casing has a longitudinal seam having a sealing strip, **characterized in that** a discontinuous layer of a sealing polymer is situated on the sealing strip, wherein the sealing polymer of the sealing strip is identical to the thermoplastic polymer with which the textile material is coated, or some of the monomer units in the sealing polymer are identical to monomer units in the thermoplastic polymer.

2. Uncooked dried sausage product according to Claim 1, **characterized in that** the water vapor permeation of the casing, measured at 23 °C and 85 % RH within the area forming the sealing seam, is at least 70 % of the value which the casing outside this area has.

3. Uncooked dried sausage product according to Claim 1, **characterized in that** 10 to 60 %, preferably 20 to 50 %, of the area of the sealing strip is covered with sealing polymer.

4. Uncooked dried sausage product according to one or more of Claims 1 to 3, **characterized in that** the points of the sealing polymer have a median diameter of 0.005 to 5 mm, preferably 0.01 to 1 mm, particularly preferably 0.05 to 0.5 mm.

5. Uncooked dried sausage product according to one or more of Claims 1 to 4, **characterized in that** the textile material is a woven fabric, knitted fabric or nonwoven, which, uncoated, preferably has a weight of 30 to 150 g/m$^2$.

6. Uncooked dried sausage product according to one or more of Claims 1 to 5, **characterized in that** the textile material comprises cotton fibers, viscose fibers, polyester fibers, polyamide fibers, polypropylene fibers, mixed fibers of cotton and polyester, mixed fibers of viscose and polyester, staple fibers based on viscose, polyester or polypropylene, or mixtures thereof.

7. Uncooked dried sausage product according to one or more of Claims 1 to 6, **characterized in that** the textile material, before being coated, has a wet strength in the transverse direction of at least 30 N/50 mm

8. Uncooked dried sausage product according to one or more of Claims 1 to 7, **characterized in that** the textile material is coated with at least one thermoplastic film-forming polymer which has polar or hydrophilic groups, is swellable in water, but is not water-soluble, and exhibits an (intrinsic) water uptake, measured in accordance with ASTM E570 (test specimen stored in water for 24 h) of at least 1.5 % by weight, wherein the textile material is preferably coated only on the side facing away from the uncooked dried sausage.

9. Uncooked dried sausage product according to one or more of Claims 1 to 8, **characterized in that** the polymer of the coating on the textile material comprises an emulsion polymer of (meth)acrylic esters, if appropriate having comonomer units of acrylic or methacrylic acid, acrylonitrile, vinyl acetate and/or styrene, a thermoplastic segment polymer or copolymer of the polyether ester, polyether block amide, polyester block amide, polyether urethane or polyester urethane type, a copolymer having units of (meth)acrylic acid and ethylene, and if appropriate one or more further vinyl monomers, wherein the fraction of (meth)acrylic acid is at least 15 % by weight, or an ethylene-vinyl alcohol copolymer having an ethylene content of at most 42 % by weight.

10. Uncooked dried sausage product according to one or more of Claims 1 to 9, **characterized in that** the sealing strip comprises a textile material which is preferably indentical to that of the casing and which is preferably coated with an ethylene/alkyl (meth)acrylate copolymer, an ethylene/(meth)acrylic acid copolymer, an ethylene/vinyl acetate copolymer, an amorphous copolyester, an aliphatic copolyamide having a softening point of below 180 °C, or a polyurethane hot-melt adhesive.

11. Uncooked dried sausage product according to one or more of Claims 1 to 10, **characterized in that** the sealing strip has a width of 10 to 30 mm.

12. Process for producing the uncooked dried sausage product according to one or more of Claims 1 to 11, **characterized in that** it comprises the following steps:

- providing a web-form, coated, textile material which is coated with a partially or completely thermoplastic layer;
- providing a sealing strip having a discontinuous sealing layer of a sealing polymer which is identical to the thermoplastic polymer with which the textile material is coated, or in which some of the monomer units are identical to the monomer units in the thermoplastic polymer;
- forming the web-form, if appropriate coated, textile material to form a tube on a stuffing horn of a sausage stuffing machine, wherein the longitudinal edges of the textile material contact or overlap after the tube forming;
- passing the sealing strip over the region in which the longitudinal edges of the textile material contact or overlap one another;
- sealing the strip against the coated textile material under the action of heat and pressure in such a manner that a mechanically stable uncoated dried sausage casing is formed;
- stuffing the casing with uncooked dried sausage emulsion directly after sealing, so that an uncooked dried sausage product is formed;
- if appropriate cold smoking the uncooked dried sausage product and
- ripening the uncooked dried sausage product.

13. Process according to Claim 12, **characterized in that** the coated textile material and the sealing strip are each provided in the form of a reel having a length of 500 to 1000 m.

14. Process according to Claim 13, **characterized in that** the sealing polymer was applied to the sealing strip in the form of powder and was subsequently calendered.

**Revendications**

1. Produit de charcuterie crue dans une enveloppe en forme de boyau à base de matière textile enduit, dans lequel la matière textile est enduite avec un polymère conditionnellement ou totalement thermoplastique et dans lequel l'enveloppe a un joint longitudinal avec une bande de scellement, **caractérisé en ce qu'**une couche discontinue en un polymère de scellement se trouve sur la bande de scellement, le polymère de scellement de la bande de scellement étant identique au polymère thermoplastique avec lequel la matière textile est enduite ou une partie des unités monomères dans le polymère de scellement étant identique à des unités monomères dans le polymère thermoplastique.

2. Produit de charcuterie crue selon la revendication 1, **caractérisé en ce que** la perméabilité à la vapeur d'eau de l'enveloppe mesurée à une température de 23 °C et une humidité relative de 85 % r.F. est égale, à l'intérieur de la surface formant le joint de scellement, à au moins 70 % de la valeur que présente l'enveloppe à l'extérieur de cette surface.

3. Produit de charcuterie crue selon la revendication 1, **caractérisé en ce que** 10 à 60 %, de préférence 20 à 50 %, de la surface de la bande de scellement sont recouverts de polymère de scellement.

4. Produit de charcuterie crue selon une ou plusieurs des revendications 1 à 3, **caractérisé en ce que** les points en polymère de scellement ont un diamètre moyen de 0,005 à 5 mm, de préférence de 0,01 à 1 mm, de manière particulièrement préférée de 0,05 à 0,5 mm.

5. Produit de charcuterie crue selon une ou plusieurs des revendications 1 à 4, **caractérisé en ce que** la matière textile est un tissu, un textile à mailles ou un non-tissé, qui a de préférence un poids de 30 à 150 g/m$^2$ lorsqu'il n'est pas enduit.

6. Produit de charcuterie crue selon une ou plusieurs des revendications 1 à 5, **caractérisé en ce que** la matière textile est constituée de fibres de coton, de fibres de viscose, de fibres de polyester, de fibres de polyamide, de fibres de polypropylène, de fibres mélangées de coton et de polyester, de fibres mélangées de viscose et de polyester, de fibres discontinues à base de viscose, de polyester ou de polypropylène ou de mélanges de celles-ci.

**7.** Produit de charcuterie crue selon une ou plusieurs des revendications 1 à 6, **caractérisé en ce que** la matière textile avant d'être enduite a une résistance à l'état humide en direction transversale d'au moins 30 N/50 mm.

**8.** Produit de charcuterie crue selon une ou plusieurs des revendications 1 à 7, **caractérisé en ce que** la matière textile est enduite avec au moins un polymère thermoplastique, formant un film, qui a des groupes polaires ou hydrophiles, qui peut gonfler dans l'eau mais n'est pas soluble et qui présente une absorption d'eau (intrinsèque) d'au moins 1,5 % en poids, mesurée selon la norme ASTM E570 (échantillon plongé 24 heures dans l'eau), la matière textile étant enduite de préférence seulement du côté situé à l'opposé de la charcuterie crue.

**9.** Produit de charcuterie crue selon une ou plusieurs des revendications 1 à 8, **caractérisé en ce que** le polymère de l'enduit sur la matière textile comprend un polymérisat en émulsion à partir d'esters (méth-)acryliques, le cas échéant avec des unités comonomères à partir d'acide acrylique ou méthacrylique, de nitrile acrylique, d'acétate de vinyle et/ou de styrol, un polymère segmenté ou copolymère thermoplastique du type polyéther-ester, polyéther bloc amide, polyester bloc amide, polyéther-uréthane ou polyester-uréthane, un copolymère avec des unités en acide (méth-)acrylique et éthylène et le cas échéant un ou plusieurs autres monomères de vinyle, la proportion d'acide (méth-)acrylique étant égale à au moins 15 % en poids, ou un copolymère éthylène-alcool vinylique avec une teneur en éthylène de 42 % en poids au maximum.

**10.** Produit de charcuterie crue selon une ou plusieurs des revendications 1 à 9, **caractérisé en ce que** la bande de scellement comprend une matière textile qui est de préférence identique à celle de l'enveloppe et qui est de préférence enduite avec un copolymère éthylène/alkyl(méth-)acrylate, un copolymère éthylène/acide (méth-)acrylique, un copolymère éthylène/acétate de vinyle, un copolyester amorphe, un copolyamide aliphatique avec un point de ramollissement inférieur à 180 °C ou un adhésif thermofusible en polyuréthane.

**11.** Produit de charcuterie crue selon une ou plusieurs des revendications 1 à 10, **caractérisé en ce que** la bande de scellement a une largeur de 10 à 30 mm.

**12.** Procédé pour fabriquer le produit de charcuterie crue selon une ou plusieurs des revendications 1 à 11, **caractérisé en ce qu'**il comprend les étapes suivantes :

- fourniture d'une matière textile enduite en forme de bande, laquelle est enduite avec un polymère conditionnellement ou totalement thermoplastique ;
- fourniture d'une bande de scellement avec une couche de scellement discontinue en un polymère de scellement qui est identique au polymère thermoplastique, avec lequel la matière textile est enduite ou dans lequel une partie des unités monomères dans le polymère de scellement est identique à des unités monomères dans le polymère thermoplastique ;
- mise en forme de boyau de la matière textile, en forme de bande et le cas échéant enduite, sur un tube de garnissage d'une machine à garnir les saucisses, les bords longitudinaux de la matière textile se touchant ou se chevauchant après la mise en forme de boyau ;
- guidage de la bande de scellement au-dessus de la zone dans laquelle les bords longitudinaux de la matière textile se touchent ou se chevauchent;
- scellement de la bande contre la matière textile enduite sous l'action de la chaleur et de la pression de manière à obtenir une enveloppe de charcuterie crue mécaniquement stable ;
- garnissage de l'enveloppe avec de la chair à saucisse immédiatement après le scellement de manière à obtenir un produit de charcuterie crue ;
- éventuellement fumage à froid du produit de charcuterie crue et
- maturation du produit de charcuterie crue.

**13.** Procédé selon la revendication 12, **caractérisé en ce que** la matière textile enduite et la bande de scellement sont fournies chacune sous la forme d'un rouleau d'une longueur de 500 à 1000 m.

**14.** Procédé selon la revendication 13, **caractérisé en ce que** le polymère de scellement a été appliqué sur la bande de scellement sous forme de poudre puis a été calandré.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2128613 A
- DE 2330774
- DE 3029028
- DE 3147519
- DE 4141924
- DE 4237138
- DE 4417244
- US 4396039 A
- US 4401135 A
- DE 1411489
- EP 0105558 A

**In der Beschreibung aufgeführte Nicht-Patentliteratur**

- **S. PAULY.** Polymer Handbook. John Wiley & Sons Inc, 1999, vol. VI, 543